# EUROPEAN PATENT SPECIFICATION

(11) **EP 2 418 372 B1**
(45) Date of publication and mention of the grant of the patent: **26.07.2017**
(21) Application number: 09843052.3
(22) Date of filing: 17.08.2009
(51) Int. Cl.: F02M 26/42, F02M 26/01

(54) **CAM FOR LIFTING/LOWERING EXHAUST VALVE, 4-CYCLE ENGINE EQUIPPED WITH SUPERCHARGER, AND METHOD FOR CONTROLLING VALVE TIMING**
NOCKEN ZUM ANHEBEN/ABSENKEN EINES AUSLASSVENTILS, MIT EINEM AUFLADER AUSGESTATTETER 4-TAKT-MOTOR UND VERFAHREN ZUR STEUERUNG DER VENTILVERSTELLUNG
CAME POUR LA LEVÉE/L'ABAISSEMENT D'UNE SOUPAPE D'ÉCHAPPEMENT, MOTEUR QUATRE-TEMPS ÉQUIPÉ D'UN COMPRESSEUR DE SURALIMENTATION ET PROCÉDÉ POUR COMMANDER LE CALAGE DE DISTRIBUTION

(30) Priority: 08.04.2009 JP 2009094263
(43) Date of publication of application: 15.02.2012
(73) Proprietor: Mitsubishi Heavy Industries, Ltd., Tokyo 108-8215 (JP)
(72) Inventor: KANEKO, Takashi, Sagamihara-shi Kanagawa 229-1193 (JP); TUJISHITA, Hiroto, Sagamihara-shi Kanagawa 229-1193 (JP)
(74) Representative: Intès, Didier Gérard André
(86) International application number: PCT/JP2009/064397
(87) International publication number: WO 2010/116546

(56) References cited:
- EP-A2- 1 512 863
- JP-A- 2001 065 320
- JP-A- 2003 184 588
- JP-A- 2005 291 210
- JP-A- 2007 263 050
- NL-A- 7 901 019
- US-A1- 2003 200 954
- US-A1- 2004 074 481
- US-A1- 2005 211 206

## Description

### BACKGROUND OF THE INVENTION

### Field of the Invention

The present invention relates to an exhaust-valve lifting and lowering cam for an exhaust gas return-flow device which returns the exhaust gas to reduce NOx; a turbocharged four-stroke cycle engine; and a valve timing control method. The present invention especially relates to a large-scale four-stroke cycle diesel engine which is used for a land generator or a ship.

### Background of the Invention

Conventionally, it is widely known that the concentration of nitrogen oxide (NOx) generated in the exhaust gas is reduced due to the reduction of the oxygen concentration and the increase of the specific-heat ratio when a part of the exhaust gas is returned to the inside of the engine cylinders. From environmental points of view, since NOx may cause photochemical smog, it is preferable to restrain the NOx generation. For this reason, it is performed to modify the opening or closing timings regarding the intake valves and exhaust valves so that the optimum valve timings are controlled and the return-flow quantity of the exhaust gas agrees with the purpose of the NOx reduction.

The Exhaust Gas Re-circulation (EGR) device that reduces the concentration of the generated NOx by reducing the oxygen concentration of the gas in the engine cylinders is widely known; generally, in the EGR device, the exhaust gas in the exhaust manifold is fed into the intake manifold so that the oxygen concentration of the gas in the engine cylinders are reduced; and, the EGR device is dependent on the relation between the air intake side condition and the gas exhaust side condition.

On the other hand, in relation to the large-scale four-stroke cycle diesel engines that are used for land generator engines or ship-propulsion engines, since the pressure of the intake gas in the intake manifold is higher than the pressure of the exhaust gas in the exhaust manifold, it is currently difficult to perform the general Exhaust Gas Re-circulation (EGR) of a large capacity. An example of an engine using EGR is shown in EP-1512863.

Hence, an exhaust gas return-flow technique by which the exhaust gas emitted from the exhaust port of an engine cylinder is directly fed into the exhaust port of another engine cylinder is developed (for instance see Patent Reference 1). In the four-stroke cycle diesel engine disclosed by Patent Reference 1, three cylinders form a group and the diesel engine is provided with multiple groups of the three cylinders; further, the engine is provided with a turbocharger connected to the exhaust manifold and an intake manifold connected to the fresh air intake-system of the turbocharger. Further, the three cylinders of the above-described group are the first cylinder, the second cylinder and the third cylinder; in a valve timing diagram as described later, the intake valves and the exhaust valves of the three cylinders open and close with a timing interval of 240°(crank angles) in the sequence of the first cylinder, the second cylinder and the third cylinder. In addition, in order that a part of the exhaust gas emitted from the first cylinder is fed into the third cylinder through the exhaust manifold as well as through the exhaust valve of the third cylinder, the exhaust valve of the third cylinder is still opened when the exhaust valve of the first cylinder begins to open; thus, the valve timings are established.

In addition, the opening and closing of the valves regarding conventional four-stroke cycle diesel engines are performed as are described in Patent Reference 1; and, no special valve timing in relation to the correlation between the cylinders is concretely disclosed in Patent Reference 1.

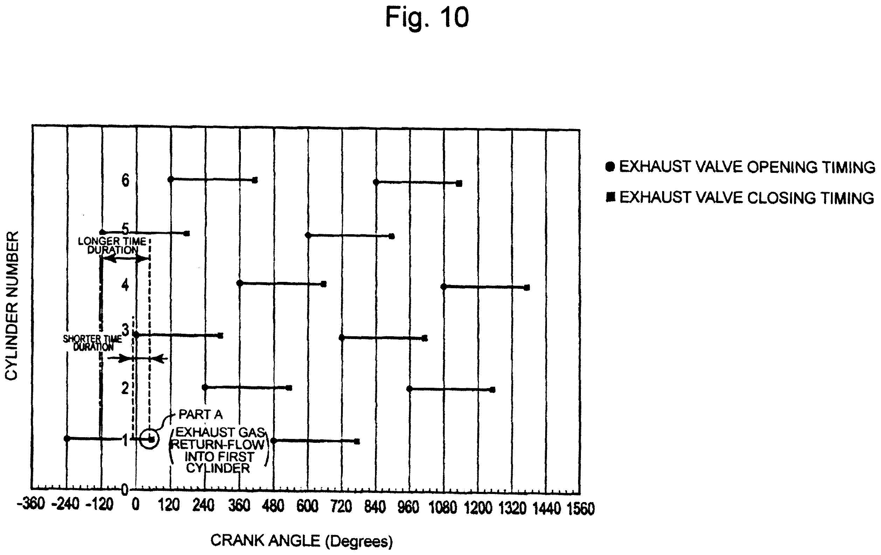

In order that the return-flow such as described in Patent Reference 1 of the exhaust gas into the cylinders is performed, for example, in a six-cylinder four-stroke cycle engine, the following valve opening and closing procedures become necessary; the explanation regarding this valve opening and closing timing is now given based on Fig. 10. As shown in Fig. 10, when the exhaust valve of the first cylinder is about to be closed, the exhaust valves of the fifth cylinder and the third cylinder are already opened. When the exhaust valve of the third cylinder begins to be opened, the pressure of the exhaust gas blowing-by into the exhaust manifold is sufficiently high. According to the concept of Patent Reference 1, this pressure of the blowing-by exhaust gas is used so that the exhaust gas in the third cylinder returns into the first cylinder through the exhaust valve ports of the third cylinder and the first cylinder. Regarding the return (back-flowing) exhaust gas, the greater the quantity and the lower the temperature, the greater the scale of the EGR; thus, in view of the NOx concentration reduction regarding the exhaust gas emitted from the engine, the greater possible quantity of the return (back-flowing) exhaust gas of lower temperature is preferable.

In addition, when the exhaust gas returns to the inside of the first cylinder from the inside of the fifth cylinder through the exhaust valve ports of the fifth cylinder and the first cylinder, sufficient time has passed after the valve of the fifth cylinder was opened so that the quantity of the exhaust gas of the return flow is small. Hence, the effect of the back-flow of the exhaust gas is substantially limited. When attention is paid to the first cylinder, the back-flow is performed during the time duration that is depicted with the part A of Fig. 10, in which the lateral axis denotes the crank angle corresponding to elapsed time. In Fig.10, while the crank angle proceeds by 720 degrees, each exhaust valve is lifted-up and lowered-down once; namely, the engine is a four-stroke cycle diesel engine, and a cycle consisting of an air-intake stroke, a compression stroke, an explosion stroke and an exhaust stroke is performed during two to-and fro movements of the piston.

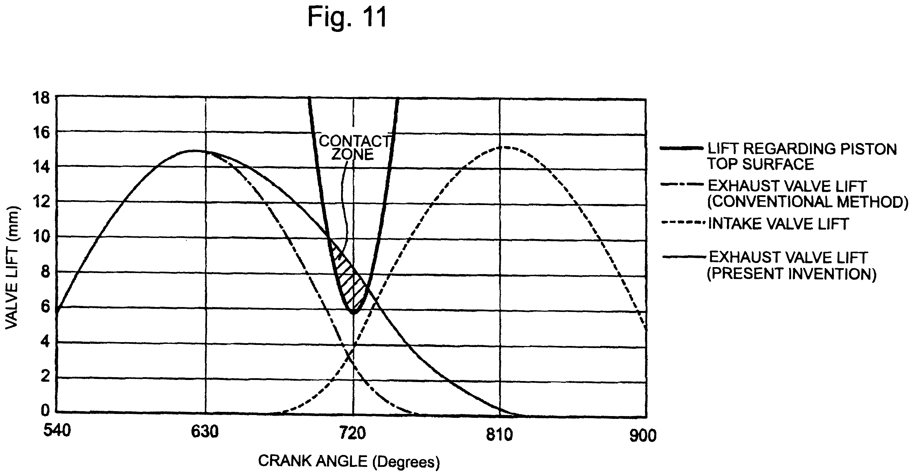

On the other hand, the time duration during which the exhaust gas returns from the third cylinder to the first cylinder includes the period in which the piston moves downward from a position around a top dead center to a piston position of mostly 60 degrees (crank angle) after the top dead center; in a case where the valve timings are designed so that the exhaust valve of the first cylinder sits on the valve seat and the exhaust valve is closed at a time when 60 degrees have passed after the piston passes trough the top dead center, the exhaust valve of the first cylinder is opened and the piston reaches the highest position, when the piston is located at the top dead center. Thus, unless careful design is performed, there may arise a possibility that the valve interferes with (comes in contact with) the piston (see Fig. 11).

In order to avoid this interference, an approach as a countermeasure can be considered by which the combustion chamber demarcated by the piston at the top dead center and the cylinder head is enlarged. When the combustion chamber is enlarged, however, the thermal efficiency is reduced. In order to avoid this reduction of the thermal efficiency, for instance, valve recesses may be formed on the piston top surface so that the valve and the piston do not interfere with each other (for example, see Patent Reference 2). However, when the valve recesses are of large volume, the space of the main combustion chamber becomes smaller; thus, hydrocarbon concentration and black smoke concentration in the exhaust gas increase (for example, see Patent Reference 2). Accordingly, it is preferable that the exhaust gas emitted from a cylinder through the exhaust port thereof returns into another cylinder through the exhaust port thereof, without the interference between the valves and the pistons, on the premise that the design modification regarding the enlargement of the valve recesses is not performed.

In addition, as for the firing order regarding a six-cylinder four-stroke cycle engine, the sequence of 1^{st} cylinder-4^{th} cylinder-2^{nd} cylinder-6^{th} cylinder-3^{rd} cylinder-5^{th} cylinder or the sequence of 1^{st} cylinder-3^{rd} cylinder-5^{th} cylinder-4^{th} cylinder-2^{nd} cylinder is disclosed (for example, see Non-Patent Reference 2).

In order to clarify the feasibility regarding the return-flow of the exhaust gas as per the present invention, it is hereby explained how the pressure of the exhaust gas in the exhaust manifold varies with regard to elapsed time in the conventional way.

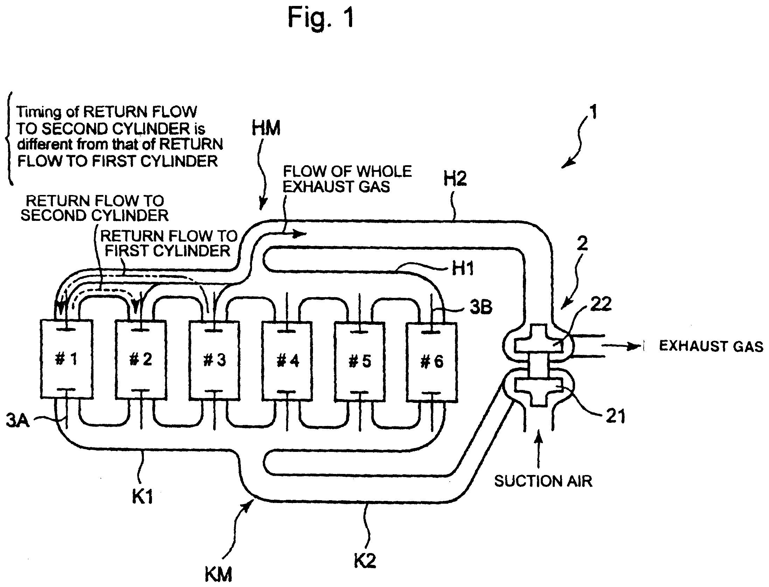

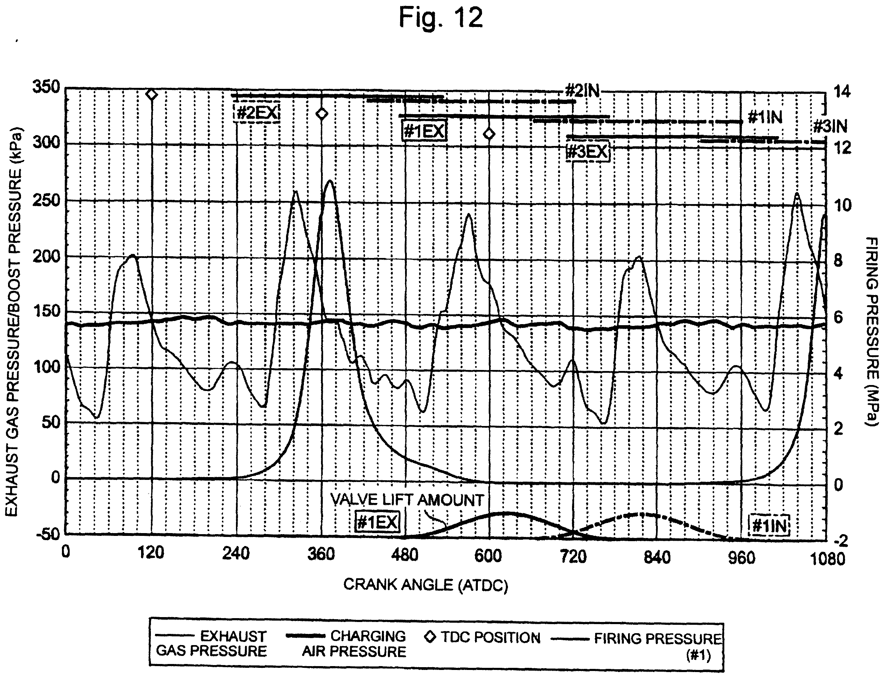

Fig. 12 shows a graph in which the exhaust gas pressure, the boost pressure and the firing pressure with respect to the crank angle transition are depicted according to a conventional technology. In Fig. 12, the time dependent (crank angle dependent) curves relate only to the first, second and third cylinders; and, the time dependent curves in relation to the fourth, fifth and six cylinders are omitted. The exhaust gas pressures regarding the first, second and third cylinders are periodically synchronized at intervals of 240 degrees, the periodic pressure varying in amplitude. The waveform of the pressure forms a pulsation pattern. The amplitude of the pressure pulsation stays mostly within a range of 60 to 250 kPa. As for the pressure fluctuations of the gas inside of the exhaust manifold of a comb teeth shape (see Fig. 1), the tendency of the pattern regarding the pressure fluctuation is similar to the tendency of the pattern regarding the pressure pulsation as described. Further, the boost pressure stably stays at a level of 150 kPa. The firing pressure of the first cylinder reaches a peak value when the crank angle a little bit exceeds 360 degrees; when the crank angle further proceeds by 720 degrees, the firing pressure reaches the next peak value.

When attention is hereby paid to the return gas-flow from the third cylinder to the first cylinder, it is desired, for instance, that the gas-flow returning be performed at a time when the crank angle is in the neighborhood of 720 degrees. In a case of the conventional engine, the exhaust gas pressure in the exhaust manifold near to the first cylinder is lower than the charging air pressure in the intake manifold near to the third cylinder; thus, it is difficult to perform the gas-flow returning. However, as described above, Patent Reference 1 does not disclose that the gas-flow returning from the third cylinder to the first cylinder can be performed by the manner that the exhaust valve closing timing regarding the first cylinder is delayed so that the opening area of the exhaust port of the first cylinder is increased while the gas-flow returning is performed, or by the manner that the exhaust valve opening timing regarding the third cylinder is advanced so that the opening area of the exhaust port of the third cylinder is increased while the exhaust valve of the third cylinder begins opening. In other words, Patent Reference 1 does not disclose a concrete technology such as these manners as described.

In addition, as for the method for changing the valve opening-and-closing timings, the ECU control approach in which what they call variable valve timing mechanism is used is conventionally adopted. However, the mechanism is complicated; the load regarding the computation thereof becomes heavy; and, the program becomes complicate. Accordingly, the cost of the mechanism becomes unfavorable.

### [References]

### [Patent References]

Patent Reference 1: JP3940799
Patent Reference 2: JP1983-110809

### [Non-Patent References]

Non-Patent Reference 1: Engine Data Book (Engines manufactured during 1994 toward 1995 in Japan), published on Aug. 15, 1995, by ISHIKAWA Teiji of Sankaidou, Inc., edited by Editorial Committee on Engine Data Book (Engines manufactured in Japan), printed in Shin-Nippon Innsatsu, Inc.
Non-Patent Reference 2: Lectures on Internal Combustion Engine Vol. I (Revised Edition), 2nd edition 6th impression, written in by NAGAO Fujio, published in Mar. 20, 1960 by Yokendou Inc., printed by Tosho-Insatsu Inc.

### SUMMARY OF THE INVENTION

### Subjects to be solved

In view of the subjects or problems in the conventional technology as described above, the present invention aims at providing a cam for lifting and lowering the exhaust valve, a turbocharged four-stroke cycle engine with the valve and a control method for controlling the valve timing of the engine so that the exhaust gas return-flow of a greatest possible quantity from a cylinder to another cylinder can be realized, wherein the pistons and the exhaust valves do not come in contact with each other, and the valve control method does not depend on an electronic control approach.

### Means to solve the Subjects

The present invention provides the means to solve the problems such as described above; namely, the present invention discloses an exhaust-valve lifting and lowering cam for an exhaust gas return-flow device which returns an exhaust gas from an exhaust port of one of a plurality of engine cylinders to another cylinder through an exhaust port of the other cylinder, the cam comprising:
a main exhaust lift part which lifts an exhaust valve to discharge theexhaust gas from the one of the cylinders;
   and
a return-flow lift part which is provided on a cam-follower descending side of the cam and delays a closing timing of the exhaust valve or maintains lift of the exhaust valve to increase amount of the exhaust gas returned from the one of the cylinders to the other cylinder,
wherein the main exhaust lift part and the return-flow lift part are formed to protrude from a base circle of the cam so as to avoid an interference between the exhaust valve and a piston and increase an overlap between the one of the cylinders and the exhaust valve of the other cylinder.

According to the above-described invention, the exhaust-valve lifting and lowering cam comprises the main exhaust lift part and the return-flow lift part, and can lift and lower the exhaust valve so that the interference between the exhaust valve and the piston can be avoided. The return-flow lift part usually forms a relatively smaller rising (protruding) curve than the main exhaust lift part; or, the return-flow lift part is usually provided with an outer periphery of a straight line part, a constant displacement (period) part or a constant velocity (period) part. In this way, in the valve lift curve (that shows the transition of the valve lift with regard to the crank angle) according to the present invention, the product of the valve lift by the crank angle, namely, the cumulative opening area of the exhaust port along elapsed time is increased (in relation to the return- flow lift part). Thus, the product of the exhaust port opening area by the elapsed time is increased. Further, according to the provision of the return-flow lift part, the quantity of the exhaust gas that returns to the inside of each cylinder through the exhaust port after the time point when the piston reaches the top dead center is increased.

In addition, in the present invention, in a case where the exhaust gas return-flow is paid attention to, the cylinder on the gas receiving side is called a cylinder or one cylinder; and, each of the cylinders other than the cylinder on the gas receiving side is called another cylinder or the other cylinder.

In a preferable mode of the present invention, the return-flow lift part comprises a constant lift part which keeps lift of the exhaust valve at a constant level for a predetermined period.

In this way, the exhaust valve is not closed for the predetermined period. Accordingly to the extended opening period of the exhaust valve, the product of the valve lift by the crank angle (the cumulative opening area of the exhaust port along elapsed time) is increased; and, the quantity of the exhaust gas that returns into a cylinder from another cylinder can be increased.

Further, in another preferable mode of the present invention,
the valve closing timing of the exhaust valve of the one of the cylinders is set at 24 to 130 degrees after a compression top dead center so as to open the exhaust valve of the one of the cylinders while an exhaust pressure of the other cylinder is higher than a charging pressure of the one of the cylinders,
and the valve opening time of an intake valve of the one of the cylinders is set at 5 to 55 degrees before the compression dead center so as to promote mixing of an inlet air of the one of the cylinders with an exhaust gas returned from the other cylinder.

According to the above-described setting regarding the valve timings, the overlap in which both the exhaust valve and the intake valve are opened can be extended as widely as possible; thus, the air charged through the intake port and the exhaust gas returned through the exhaust port are mixed in the cylinder as lengthily as possible. Accordingly, the air charged through the intake port and the exhaust-gas returned through the exhaust port are sufficiently mixed. Thanks to this sufficient mixing of the air and the gas, the inhomogeneous distribution regarding the air fuel mixture (uneven oxygen-density distribution) can be evaded during the combustion (explosion) stroke. In this way, since the homogeneous air fuel mixture is formed and the combustion is performed, the soot formation or the NOx formation after the completion of the combustion can be reduced; in particular, when the exhaust gas is returned to the cylinders according to the timings based on this mode of the present invention, the combustion is performed with sufficient lead time corresponding to the time interval of approximately one revolution of the engine (crankshaft). Thus, in the fuel air mixture, the diffusion of the fuel or the homogenization of the mixture is sufficiently performed. Incidentally, the exhaust valve 3B whose cam-profile is configured so as to perform the valve seating twice during one cycle of four strokes is known; however, according to this approach (the conventional approach), it is difficult to secure sufficient mixing lead time for homogenizing the air fuel mixture.

Further, in a case where the inhomogeneous distribution regarding the air fuel mixture (uneven oxygen-density distribution) is formed, the black smoke is easily produced in a fuel rich area (i.e. in a low oxygen density area); and, the NOx is easily produced in a fuel lean area (i.e. in a high oxygen density area). Thus, unfavorable results are brought about. In order to evade inhomogeneous distribution regarding the air fuel mixture, there is a conventional approach in which a high swirl ratio regarding the swirl in the engine cylinder is adopted; however, a high swirl ratio generally accompanies the reduction of the quantity of the air to be charged into the engine cylinder. Hence, it is rather favorable to mix the exhaust gas with the fresh air by performing the collision of the exhaust gas and the fresh air; and, this approach (this mode of the present invention) does not accompany the reduction of the charging air quantity.

In another preferable mode of the present invention, the return-flow lift part lifts the exhaust valve at a constant velocity until the exhaust valve is closed.

In this way, by the manner that the constant velocity movement regarding the valve lift is performed as gently as possible, the product of the valve lift by the crank angle (the cumulative opening area of the exhaust port along elapsed time) can be increased in comparison with the case of the conventional cam whose cam profile forms a usual protruding cam-lift curve (a relation curve of the valve lift displacement with regard to the crank angle (as an index of elapsed time)). In other words, the quantity of the return exhaust gas can be increased. Incidentally, the phrase " without following a curved lift curve" means that the exhaust valve sits on the valve seat while keeping the valve lift velocity without reducing the velocity.

In another preferable mode of the present invention, the return-flow lift part comprises a constant velocity lifting part which keeps a lifting velocity of the exhaust valve at a constant value.

In response to the constant velocity part provided as described, the quantity of the return exhaust gas can be increased. Further, the cam profile can be configured with three parts that rise outward from the base circle in three stages. In this way, the flexibility (the degree of freedom) in designing the cam can be enhanced. Thus, it becomes possible that, by the manner that the exhaust valve comes near to the piston at the top dead center as close as possible, the quantity of the exhaust gas that returns to the inside of the engine is remarkably increased.

The cams used in an engine usually have the same profile. However, in another preferable mode of the present invention, multiple cam profiles may be used for the engine; the cam profile for the cam in each cylinder is preferably determined in response to the quantity of the return exhaust gas of the cylinder.

For instance, for the second and third cylinders in which the period where the exhaust gas pressure is higher than the charging air pressure (the boost pressure) becomes longer, the cam profile may be formed so that the exhaust valve closing timing is delayed; for the first cylinder in which the period where the exhaust gas pressure is higher than the charging air pressure (the boost pressure) becomes shorter, the cam profile may be formed so that the exhaust valve closing timing is advanced in comparison with the second and third cylinders. It is desired that the opening period regarding the exhaust valve be set as long as possible; however, when the opening period is evenly prolonged all over the cylinders, the exhaust gas pressure is overcome by the charging air pressure, for instance, in the first cylinder so that the charging air is inclined to blow-by the first cylinder and the effect on the exhaust gas return is spoiled.

In this way, in response to the difference regarding the influence of the exhaust gas pulsation (pressure fluctuation) on each cylinder, the profile of the cam may be differentiated; by introducing the cam profile according to the exhaust gas pulsation, the quantity of the return exhaust gas can be relatively increased.

Further, in order to solve the problems in the conventional technology, the present invention provides a turbocharged four-stroke cycle engine with a plurality of engine cylinders comprising:
an exhaust gas return-flow device which returns an exhaust gas from an exhaust port of one of the engine cylinders to another cylinder through an exhaust port of the other cylinder;
an exhaust-valve lifting and lowering cam which lifts or lowers an exhaust valve of the one of the cylinders;
and a turbocharger adapted to receive an exhaust gas from each cylinder
and which is provided on the exhaust-side of the engine,
wherein the exhaust-valve lifting and lowering cam comprises:
a main exhaust lift part which lifts an exhaust valve to discharge the exhaust gas from the one of the cylinders; and
a return-flow lift part which is provided on a cam-follower descending side of the cam and delays a closing timing of the exhaust valve or maintains lift of the exhaust valve to increase amount of the exhaust gas returned from the one of the cylinders to the other cylinder,
wherein the main exhaust lift part and the return-flow lift part are formed to protrude from a base circle of the cam so as to avoid an interference between the exhaust valve and a piston and increase an overlap between the one of the cylinders and the exhaust valve of the other cylinder.

According to the turbocharged four-stroke cycle engine as described above, the valve timings regarding each valve are appropriately and mechanically arranged, for instance, in a six cylinder engine by using the common space in the exhaust manifold common to the six cylinders, so that the exhaust gas discharged from the third cylinder can be returned to the first cylinder as well as the exhaust gas discharged from the fourth cylinder can be returned to the sixth cylinder. Thus, the reduction of NOx can be remarkably achieved. Further, in applying this invention, only the cam profile may be modified. Accordingly, the mechanism (of the engine) is prevented from being complicated; the load of performing calculations in the engine control unit (ECU) is not increased; and, the computation program is prevented from being complicated. In other words, with a slight design modification, the present invention can be applied to the conventional mass-production articles.

The present invention can be applied to the large-sized diesel engines such as the engines used for land engine-generators, inboard engines and trucks.

Further, preferably in the turbocharged four-stroke cycle engine as described above, an exhaust manifold provided on the exhaust-side of the engine comprises:
a first exhaust pipe into which the exhaust gas discharged from each cylinder;
and a second exhaust pipe which connects the middle part of the first exhaust pipe to the turbocharger.

According to the configuration as described above, the exhaust gas from one cylinder can be returned to another cylinder; for instance, in a six cylinder engine,
the exhaust gas discharged from the third cylinder can be returned to the first cylinder,
the exhaust gas discharged from the first cylinder can be returned to the second cylinder,
the exhaust gas discharged from the second cylinder can be returned to the third cylinder,
the exhaust gas discharged from the fifth cylinder can be returned to the fourth cylinder,
the exhaust gas discharged from the sixth cylinder can be returned to the fifth cylinder, and
the exhaust gas discharged from the fourth cylinder can be returned to the sixth cylinder.

Further, preferably in the turbocharged four-stroke cycle engine (having, for instance, six cylinders) which returns the exhaust gas to the inside of the engine, the valve overlaps between the exhaust valve and the intake valve of the first cylinder and the sixth cylinder are smaller than that of the second cylinder to the fifth cylinder.

When the return exhaust gas streams in the exhaust manifold between the first cylinder and the third cylinder as well as between the fourth cylinder and the fifth cylinder, the return exhaust gas discharged from the first cylinder or the sixth cylinder streams for twice the distance between a cylinder center and the adjacent cylinder center. Thus, the exhaust gas discharged from the first cylinder or the sixth cylinder is harder to be returned into the inside of the corresponding cylinder in comparison to the gas discharged from one of the second to fifth cylinders. Accordingly, as for the first cylinder and the sixth cylinder, even when the overlaps regarding the exhaust valve and the intake valve are reduced as described above according to the present invention, it is expected that the NOx reduction effect is hardly spoiled. On the contrary, when the to-be-returned exhaust gas discharged from the first cylinder and the sixth cylinder is excessively returned into the engine, the density of black smoke inherent to diesel engines is increased. Therefore, it is rather preferable that the overlap period regarding the first cylinder and the sixth cylinder is reduced to restrain the black smoke density.

As a matter of course, the present invention is applicable to a multiple cylinder engine that has cylinders of even number (from 6 to 16) other than the six-cylinder engine.

Further, preferably in the six-cylinder engine, instead of reducing the overlap period (between the opening period of the intake valve and the opening period of the exhaust valve) regarding the first cylinder and the sixth cylinder, at least one cylinder cut operation regarding the engine may be performed so that the cylinder from which a smaller quantity of the exhaust gas returns (into the engine) is selected as the cylinder to be cut in preference to other cylinders. Incidentally, this manner according to the present invention is not limited to the six-cylinder engine.

In a natural-gas diesel oil dual fuel gas engine in which natural gas is used as the main fuel and diesel oil is used as the micro-pilot fuel for ignition, it is ascertained that the air natural-gas pre-mixture becomes lean and the combustion is inactivated (incomplete combustion is brought) during the low load operation of the engine. Hence, by the manner that the number of cylinders placed in operation is decreased and the power output per cylinder is increased, the air natural-gas pre-mixture can be rich (the fuel concentration can be dense) during the low load operation, the NOx formation can be reduced during the low load operation and the thermal efficiency can be increased during the low load operation.

Further, the present invention provides a valve timing control method for controlling the timing of an exhaust valve, according to the manner described thus far. The valve timing control method brings the same effect on the engine performance as is the case of the engine operation with the above-described exhaust cam for lifting and lowering the exhaust valve.

### Effects of the Invention

According to the present invention, in the cam for lifting and lowering the exhaust valve, in the turbocharged and in the control method for controlling the valve timing of the engine, the exhaust gas return-flow from a cylinder to another cylinder can be formed as greatly as possible, wherein the pistons and the exhaust valves do not come in contact with each other, and the valve control method does not depend on an electronic control approach. Further, particularly in the engine provided with configuration according to the present invention, the valve timings are appropriately arranged so that the valve timings are mechanically adjusted. Thus, for instance, in a four-stroke cycle six-cylinder engine in which the firing order is the sequence of 1^{st} cylinder-5^{th} cylinder-3^{rd} cylinder-6^{th} cylinder-2^{nd} cylinder-4^{th} cylinder,
the exhaust gas discharged from the third cylinder can be returned to the first cylinder,
the exhaust gas discharged from the first cylinder can be returned to the second cylinder,
the exhaust gas discharged from the second cylinder can be returned to the third cylinder,
the exhaust gas discharged from the fifth cylinder can be returned to the fourth cylinder,
the exhaust gas discharged from the sixth cylinder can be returned to the fifth cylinder, and
the exhaust gas discharged from the fourth cylinder can be returned to the sixth cylinder.

### BRIEF DESCRIPTION OF THE DRAWINGS

Fig. 1 shows an outline of a four-stroke cycle engine provided with a turbocharger according to the present invention;
Fig. 2 shows a graph of the valve lift curve with respect to the crank angle regarding the turbocharged four-stroke cycle engine according to a first mode of the present invention;
Fig. 3 depicts a cam profile of the cam according the first mode of the present invention;
Fig. 4 explains a modified outline of the turbocharged four-stroke cycle engine according to the present invention;
Fig. 5 shows a valve timing diagram that is applied to a second mode of the present invention;
Fig.6 shows a graph of the valve lift curve with respect to the crank angle regarding the turbocharged four-stroke cycle engine according a third mode of the present invention;
Fig.7 depicts a cam profile of the cam according to the third mode of the present invention;
Fig.8 shows a graph of the valve lift curve with respect to the crank angle regarding the turbocharged four-stroke cycle engine according a fourth mode of the present invention;
Fig.9 depicts a cam profile of the cam according to the fourth mode of the present invention;
Fig.10 is a valve timing diagram that shows the open timing as well as the close timing of each exhaust valve regarding a six-cylinder engine;
Fig. 11 shows a graph of the valve lift curve with respect to the crank angle regarding the turbocharged four-stroke cycle diesel engine according to a conventional technology;
Fig. 12 shows a graph in which the exhaust gas pressure, the boost pressure and the firing pressure with respect to the crank angle transition are depicted according to a conventional technology.

### DETAILED DESCRIPTION OF THE PREFERRED EMBODIMENTS OR MODES

Hereafter, the present invention will be described in detail with reference to the embodiments shown in the figures. However, the dimensions, materials, shape, the relative placement and so on of a component described in these embodiments shall not be construed as limiting the scope of the invention thereto, unless especially specific mention is made.

Further, the present invention will be described in detail with reference to the modes (variations) shown in the figures. However, the dimensions, materials, shape, the relative placement and so on of a component described in these modes shall not be construed as limiting the scope of the invention thereto, unless especially specific mention is made.

### (First Mode)

Fig. 1 shows an outline of a four-stroke cycle engine provided with a turbocharger according to the present invention. It is assumed that the turbocharged four-stroke cycle engine according to this mode (variation) is a diesel engine. The charge air side of the scavenging system 1 includes, but not limited to, a first charge air pipe K1 of a comb-teeth shape through which the charging air is fed to each of the six cylinders, and a second charge air pipe K2 of one pipe that is connected to the compressor 21 of the turbocharger 2 and the middle part of the first charge air pipe K1. The first charge air pipe K1 and the second charge air pipe K2 configure the intake manifold KM.

Further, the exhaust gas side of the four-stroke cycle engine includes, but not limited to, a first exhaust pipe H1 of a comb-teeth shape into which the exhaust gas from each of the six cylinders is fed, and a second exhaust pipe H2 of one pipe that is connected to the turbine 22 and the middle part of the first exhaust pipe H1. The first exhaust pipe H1 and the second exhaust pipe H2 configure the exhaust manifold HM.

Further, each cylinder is provided with at least one intake (air) valve 3A and at least one exhaust valve 3B; for instance, the two intake valves 3A and the two exhaust valves 3B are provided in each cylinder. The two intake valves 3A are synchronously lifted-up and lowered-down in each cylinder; the two exhaust valves 3B are also synchronously lifted-up and lowered-down in each cylinder.

Additionally, in the present mode, the pressure fluctuations in the scavenging system determine the direction of the return-flow regarding the exhaust gas; hence, the pressure in the turbine 22 of the turbocharger 2 also has an effect on the strength and the direction regarding the return-flow.

In Fig. 1, from a side (e.g. the left side) toward another side (e. g. the right side), the first cylinder (described as #1 in Fig. 1) to the sixth cylinder (described as #6 in Fig. 1) are arranged in order; all the valve timings are arranged in compliance to the exhaust gas flows in which the exhaust gas from the third cylinder returns into the first cylinder, the exhaust gas from the first cylinder returns into the second cylinder, the exhaust gas from the second cylinder returns into the third cylinder, the exhaust gas from the fifth cylinder returns into the fourth cylinder, the exhaust gas from the sixth cylinder returns into the fifth cylinder, and the exhaust gas from the fourth cylinder returns into the sixth cylinder. As described later, these valve timings are arranged based on the contrivance regarding the cam profile. This contrivance is the prime feature of the present invention.

In this mode of the present invention, the firing order is the first cylinder-the fifth cylinder-the third cylinder-the sixth cylinder-the second cylinder-the fourth cylinder, in sequence. Thus, the second cylinder is operated with the phase difference of 480 degrees of the crank angle against the first cylinder; the third cylinder is operated with the phase difference of 240 degrees of the crank angle against the first cylinder; the fourth cylinder is operated with the phase difference of 600 degrees of the crank angle against the first cylinder; the fifth cylinder is operated with the phase difference of 120 degrees of the crank angle against the first cylinder; the sixth cylinder is operated with the phase difference of 360 degrees of the crank angle against the first cylinder. Hence, the return-flow of the exhaust gas from the third cylinder into the first cylinder is performed with the phase difference of 360 degrees of the crank angle against the return-flow of the exhaust gas from the fourth cylinder into the sixth cylinder. In a similar way, the return-flow of the exhaust gas from the first cylinder into the second cylinder is performed with the phase difference of 360 degrees of the crank angle against the return-flow of the exhaust gas from the sixth cylinder into the fifth cylinder; the return-flow of the exhaust gas from the second cylinder into the third cylinder is performed with the phase difference of 360 degrees of the crank angle against the return-flow of the exhaust gas from the fifth cylinder to the fourth cylinder. In the six-cylinder engine, explosion is performed in one of the six cylinders, every crank angle interval of 120 degrees.

In addition, in a case where the firing order is the first cylinder-the fourth cylinder-the second cylinder-the sixth cylinder-the third cylinder-the fifth cylinder in sequence and the phase difference from an explosion cylinder to the next explosion cylinder is 120 degrees as is the case with the former firing sequence, the return-flow of the exhaust gas is performed from the second cylinder into the first cylinder, from the third cylinder into the second cylinder, from the first cylinder into the third cylinder, from the fourth cylinder into the fifth cylinder, from the sixth cylinder into the fourth cylinder and the fifth cylinder into the sixth cylinder. In each cylinder of a four-stroke cycle engine, the sequential processes of air intake, compression, explosion and gas exhaust are cyclically and repeatedly performed; on the premise that the firing order is consecutively arranged so as to be not interrupted, the firing order as to the first to third cylinders may be the first cylinder-the second cylinder-the third cylinder, the second cylinder-the first cylinder-the third cylinder, the first cylinder-the third cylinder-the second cylinder, or the second cylinder-the third cylinder-the first cylinder; and, any one of the fourth to sixth cylinders may be arbitrarily inserted without duplication between any consecutive cylinders out of the first to third cylinders.

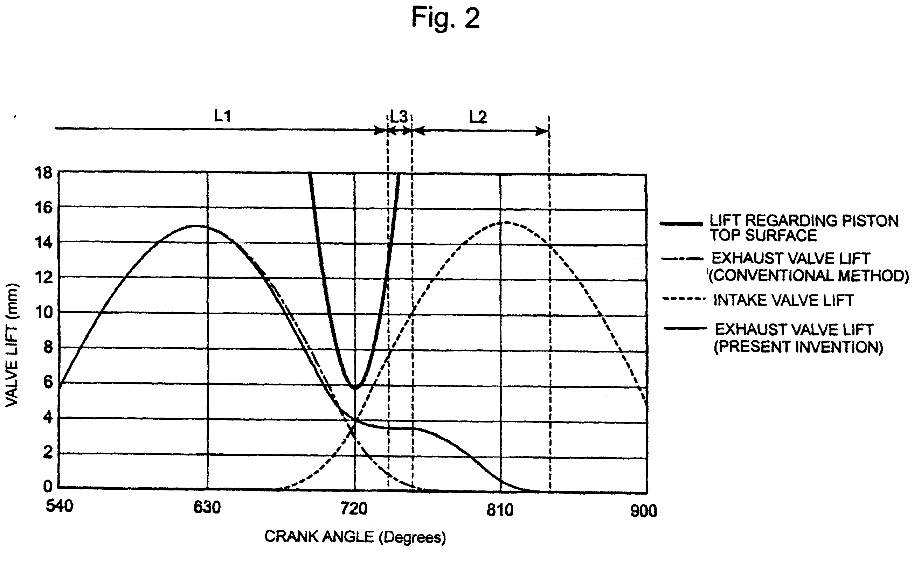

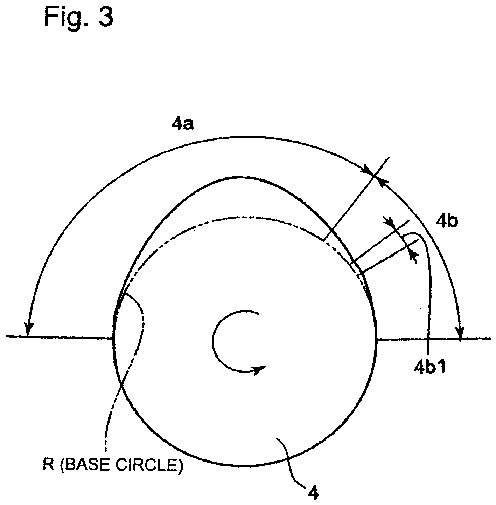

Fig. 2 shows a graph of the valve lift curve with respect to the crank angle regarding the turbocharged four-stroke cycle engine according to a first mode of the present invention; Fig. 3 depicts a cam profile of the cam according the first mode.

In Fig. 2, the dash-dot line is a part of a conventional valve (exhaust valve) lift curve; the conventional curve is extended in the lateral direction. The crank angle (the lateral axis variable) area (range) regarding the conventional valve is divided into two areas, namely, the area L1 and the area L2. Between the area L1 and the area L2, an area L3 in which the valve lift is constant is inserted so that the area L1 and the area L2 are connected via the area L3. Thus, the cam lift curve (according to this mode) of the solid line is formed. Thereby, in order to smooth the valve lift curve (the newly extended valve lift curve), the lift lowering speed after the cam lift begins reducing is a little bit accelerated (in a minus direction) in comparison with the conventional cam; and the valve lift curve is inflected in the neighborhood of the top dead center (near the crank angle of 720 degrees) so that the curve in the area L1 is smoothly connected to the curve in the area L3.

Additionally, in Fig. 2, the thick solid curve shows how the piston top surface comes close to the valves (the valve cone bottom surfaces); if the valve lift curves intersect the thick solid curve so as to enter the inside zone of the thick solid curve, then the valve cone bottom surfaces come in contact with the piston. Hence, the valve lift curves are designed so that the valve lift curves do not intersect the thick solid curve.

As described above, in Fig. 2, the dash-dot line is a part of a conventional valve (exhaust valve) lift curve; the shape of the exhaust valve lift curve is the same as the shape of the intake valve lift curve that is depicted by the broken line. In other words, the profile (regarding the ascending part profile and the descending part profile) of the intake cam is conventionally the same as the profile (regarding the ascending part profile and the descending part profile) of the exhaust cam.

As described above, the lift curve of the exhaust valve according to this mode of the present invention is the curve such as described in Fig. 2 with the dash-dot line. As shown in Fig. 2, from certain timing before the crank angle reaches 720 degrees, the lift curve depicted by the solid line regarding the exhaust valve according to this mode of the present invention is below the lift curve depicted by the dash-dot line regarding the exhaust valve according to the conventional approach; and, according to the present invention, the valve lift becomes constant while the crank angle is in a range from 740 to 755 degrees. This range corresponds to a constant lift part 4b1 of the cam profile depicted in Fig. 3; the constant lift part forms a part of a circle that is concentric to the base circle R, the circle being a little bit larger than the base circle. After the constant valve lift corresponding to the constant lift part 4b1 finishes, the valve lift curve of the solid line gradually and smoothly descends in a monotonously decreasing manner. The location where the top surface of the piston comes to the highest position is the location of the top dead center (TDC) where the crank angle is 720 degrees; according to the lift curve of the solid line, the valve lift becomes larger than the valve lift of the conventional cam after the crank angle passes by the neighborhood of the top dead center. Hence, according to the lift curve of the solid line, the greater quantity of the exhaust gas can return into the inside of the cylinders.

In this way, the cam profile of the pressing cam 4 for pressing the exhaust valve 3B includes a gas return lobe part 4b formed on the return side of the cam 4; the gas return lobe part 4b includes a constant displacement part 4b1 so that the exhaust valve lift is kept at a constant level for a predetermined period in response to the constant displacement part of the cam profile. Thus, during the period, the downward movement of the exhaust valve 3B stops; for the increased dwelling period of the exhaust valve, the product of the valve lift by the crank angle, namely, the cumulative opening area of the exhaust port along elapsed time increases. Accordingly, the quantity of the exhaust gas retuning into the cylinder from the other cylinder increases. In addition, the predetermined period means a part of the period from the time point when the lift of the exhaust valve begins decreasing to a time point when the exhaust valve sits on the valve seat. In a case where the exhaust valve lift displacement is kept at a constant level for the predetermined period, the lift curve runs parallel to the lateral axis during the period. In other words, the term constant-lift means a lift displacement that does not change during the period. When the lift curve runs along an inclined line, then the part of the cam corresponding the inclined line is called a constant velocity part of the cam instead of the constant displacement part of the cam.

The pressing cam 4 for the exhaust valve according to this mode of the present invention includes a main exhaust lobe part 4a that rises outward from the base circle R, so that the opening overlap regarding the exhaust valves of the one cylinder and another cylinder is increased and the contact between the exhaust valve and the piston is evaded. The main exhaust lobe part 4a is formed so as to open the exhaust valve and discharge the exhaust gas in the cylinder. Further, on the return side of the profile of the exhaust cam 4, the gas return lobe part 4b is formed so that the quantity of the exhaust gas that returns toward the air charging side (i.e. toward cylinder inside) increases. When this gas return lobe part 4b is provided, the closing timing of the exhaust valve can be delayed and the exhaust valve lift can be maintained at a highest possible level; and, the gas return lobe part 4b includes the constant displacement part 4b1. In addition, the outer periphery profile of the cam is configured basically with the main exhaust lobe part 4a of an arc shape that rises toward outward and the gas return lobe part 4b of an arc shape that rises toward outward, both the parts being superimposed over each other. In this way, the constant displacement part or a constant speed part described later is formed. As a matter of course, the main exhaust lobe part 4a and the gas return lobe part 4b may form a profile including two arising parts like the humps of a camel; thereby, the timing of the top dead center may be located between the two arising parts.

Further, as depicted in Fig. 3, the gas return lobe part 4b is formed only on the cam return side; however, the profile of the cam rise side and the profile of the cam return side may be symmetrically formed. In other words, when the closing timing of the exhaust valve 3B regarding the first cylinder is delayed so that the opening of the exhaust port regarding the first cylinder is increased, as well as when the opening timing of the exhaust valve 3B regarding the third cylinder is advanced, the return of the exhaust gas from the third cylinder to the first cylinder is promoted.

The main exhaust lobe part 4a and the gas return lobe part 4b regarding the exhaust pressing cam 4 according to this mode of the present invention are formed so that each part 4a or 4b rises from the base circle R which center is the rotation center of the cam (namely, the cam whole profile includes a plurality of element profiles); and, both the parts 4a and 4b are superimposed over each other. From this point of view, a definite boundary point by which the areas L1, L2 and L3 (as depicted in Fig. 2) are separated may not be strictly defined. Thus, the boundary points between an area and the adjacent area are approximately determined with errors. In short, the feature of this mode of the present invention is that the constant displacement part (the area L3) is provided between the conventionally existing areas L1 and L2. In this way, the product of the valve lift by the crank angle may be increased and the quantity of the exhaust gas that returns to the one cylinder from the other cylinder may be increased.

Further, the valve lifting and lowering mechanism may include a component such as a tappet, a pushrod, and a rocker arm; namely, the valve may be lifted-up and lowered by the cam via such a component. In addition, there may be a valve lifter of a cup shape between the cam and the valve so that the rising part of the cam directly presses the valve lifter. The valve lifting and lowering mechanism is not limited to the components described hereby. In addition, the cams are fitted to or integrated with a camshaft; each cam is fitted to the camshaft with a fitting angle in response to the firing angle or the rotation phase difference regarding the cylinder at which the valve and the cam are arranged.

In the turbocharged engine 1 that is configured as described above and can return the exhaust gas from a cylinder to another cylinder, the valve timings regarding each valve are appropriately arranged so that
the exhaust gas discharged from the third cylinder can be returned to the first cylinder,
the exhaust gas discharged from the first cylinder can be returned to the second cylinder,
the exhaust gas discharged from the second cylinder can be returned to the third cylinder,
the exhaust gas discharged from the fifth cylinder can be returned to the fourth cylinder,
the exhaust gas discharged from the sixth cylinder can be returned to the fifth cylinder, and
the exhaust gas discharged from the fourth cylinder can be returned to the sixth cylinder. Further, in applying this mode, only the cam profile may be modified. Accordingly, the mechanism is prevented from being complicated; the load of performing calculations in the engine control unit (ECU) is not increased; and, the computation program is prevented from being complicated. In other words, with a slight design modification, this mode of the present invention can be applied to the conventional mass-production articles.

Further, in the engine scavenging system (i.e. the turbocharged four-stroke engine having, for instance, six cylinders) 1 as described above, it is preferable that the valve overlaps (regarding the exhaust valve 3B and the intake valve 3A) for the first cylinder and the sixth cylinder are smaller than the valve overlaps for the second cylinder to the fifth cylinder. When the return exhaust gas streams in the exhaust manifold HM between the first cylinder and the third cylinder as well as between the fourth cylinder and the fifth cylinder, the return-exhaust-gas discharged from the first cylinder or the sixth cylinder streams for twice the distance between a cylinder center and the adjacent cylinder center. Thus, the exhaust gas discharged from the first cylinder or the sixth cylinder is harder to be returned into the inside of the corresponding cylinder in comparison to the gas discharged from one of the second to fifth cylinders. Accordingly, as for the first cylinder and the sixth cylinder, even when the overlap regarding the opening period of the exhaust valve 3B and the opening period of the intake valve 3A is reduced, there arises little effect on NOx reduction. On the contrary, when the to-be-returned exhaust gas discharged from the first cylinder and the sixth cylinder is excessively increased by the manner of the overlap period, the density of black smoke inherent to diesel engines is increased. Therefore, it is rather preferable that the overlap period regarding the first cylinder and the sixth cylinder is reduced to restrain the black smoke density.

In addition to the example of the 6-cylinder engine, as a matter of course, the present invention is applicable to a multiple cylinder engine that has cylinders of even number not less than 6.

Further, instead of reducing the overlap period regarding the first cylinder and the sixth cylinder, at least one cylinder cut operation regarding the engine may be performed so that the cylinder from which a smaller quantity of the exhaust gas returns (into the engine) is selected as the cylinder to be cut in preference to other cylinders.

In a natural-gas diesel oil dual fuel gas engine in which natural gas is used as the main fuel and diesel oil is used as the micro-pilot fuel for ignition, it is ascertained that the air natural-gas pre-mixture becomes lean and the combustion is inactivated (incomplete combustion is brought) during the low load operation of the engine. Hence, by the manner that the number of cylinders placed in operation is decreased and the power output per cylinder is increased, the air natural-gas pre-mixture can be rich (the fuel concentration can be dense) during the low load operation, the NOx formation can be reduced during the low load operation and the thermal efficiency can be increased during the low load operation.

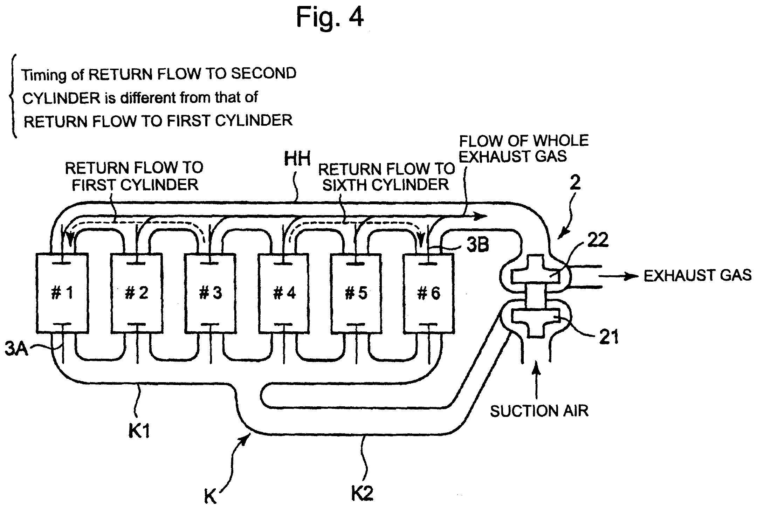

Further, in the present invention, the above-described exhaust manifold HM in the turbocharged four-stroke cycle engine with the configuration as described above may be modified as follows. In other words, as shown in Fig. 4, the engine may be provided with an exhaust manifold HH that is an exhaust pipe part common to each cylinder from which exhaust gas streams into the turbine 22 of the turbocharger 2. According to this configuration, the valve timings are arranged so that the exhaust gas discharged from the third cylinder returns to the first cylinder, and the exhaust gas discharged from the fourth cylinder returns to the sixth cylinder. According to this configuration, the effect of the before-described mode can be also obtained.

Further, as described above, in the first mode of the present invention, the exhaust cam is provided with one constant displacement part 4b1; as a matter of course, the exhaust cam may be provided with multiple constant displacement parts 4b1 in stages so that the exhaust valve 3B is stepwisely closed.

Further, as described above, in the examples of the first mode, the engine is provided with the turbocharger 2 that brings the resistance regarding exhaust gas flow; however, the exhaust gas flow resistance may be brought by any resistance device, instead of the turbocharger 2, that is provided on a part way of the exhaust passage through which the exhaust gas is discharge outside and increases the exhaust gas pressure on the upstream side of the resistance device. In this way, the exhaust gas pressure can be increased and the quantity of the exhaust gas that returns from the one cylinder to the exhaust port of another cylinder can be increased. Thus, the NOx reduction effect due to the return flow of the exhaust gas can be achieved.

### (Second Mode)

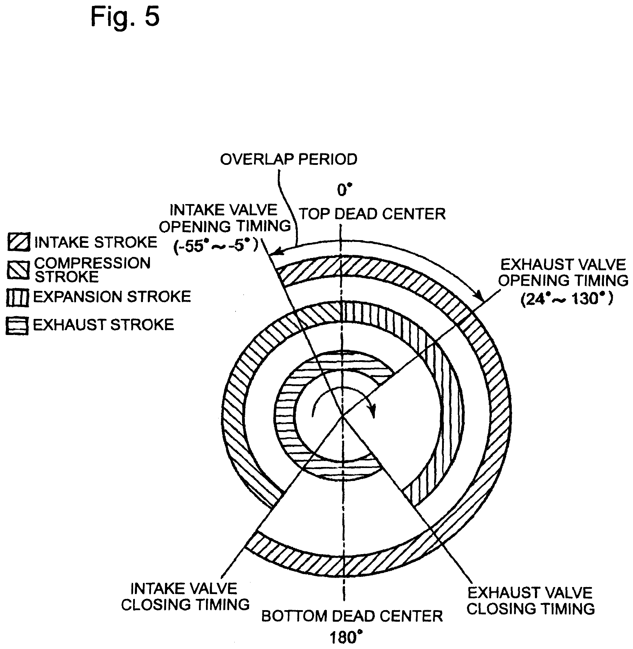

Fig. 5 shows a valve timing diagram that is applied to a second mode of the present invention. Incidentally, the same components in the second mode as in the first mode are given common numerals or symbols; and, explanation repetitions are omitted.

As is the case with the first mode, in this second mode, the cam profile of the pressing cam 4 for pressing the exhaust valve of the one cylinder includes, but not limited to,
a main exhaust lobe part 4a for opening the exhaust valve so that the exhaust gas is discharged out of the cylinder (corresponding to the exhaust valve); and,
a gas return lobe part for opening the exhaust valve so that the quantity of the exhaust gas from the one of two cylinders back to the other cylinder is increased,
wherein
the cam profile is formed so that the interference between the exhaust valve and the piston is evaded and the overlap regarding the exhaust valve 3B of the one cylinder and the exhaust valve 3B of the other cylinder is increased by the manner that the main exhaust lobe part and the gas return lobe part rise outward from the base circle.

Further, in the second mode, the valve closing timing of the exhaust valve 3B regarding the one of the two cylinders is set at 24 to 130 degrees of the crank angle after a compression top dead center, so that the intake valve 3A and the exhaust valve 3B are in an opened condition, while the pressure of the exhaust gas discharged from the other cylinder is higher than the pressure of the charging air pressure of the one cylinder; and,
the valve opening time point of the intake valve 3A corresponding to the cylinder of the exhaust valve 3B is set at 5 to 55 degrees of degrees of the crank angle before the compression dead center so that the mixing of the charged air and the returned exhaust gas in the one cylinder is promoted.

In order to realize the setting of the valve timings as described above, as the parts of the cam profile regarding the exhaust valve pressing cam 4 for each cylinder, the main exhaust lobe part 4a is formed so that the exhaust gas is discharged out of the cylinder, and the gas return lobe part 4b is formed so that the quantity of the exhaust gas from one of two cylinders back to the other cylinder is increased. Thereby, the cam profile is formed so that the interference between the exhaust valve 3B and the piston is avoided and the overlap regarding the exhaust valve 3B of the one cylinder and the exhaust valve 3B of the other cylinder is increased by the manner that the main exhaust lobe part 4a and the gas return lobe part 4b rise outward from the base circle.

According to the above-described setting regarding the valve timings, the overlap in which both the exhaust valve 3B and the intake valve 3A are opened can be extended as widely as possible; thus, the air charged through the intake port and the exhaust gas returned through the exhaust port are mixed in the cylinder as lengthily as possible. Accordingly, the air charged through the intake port and the exhaust-gas returning through the exhaust port are sufficiently mixed. Thanks to this sufficient mixing of the air and the gas, the inhomogeneous distribution regarding the air fuel mixture (uneven oxygen-density distribution) can be evaded during the combustion (explosion) stroke. In this way, since the homogeneous air fuel mixture is formed and the combustion is performed, the soot formation or the NOx formation after the completion of the combustion can be reduced; in particular, when the exhaust gas is returned to the cylinders according to the timings based on this mode of the present invention, the combustion is performed with sufficient lead time corresponding to the time interval of approximately one revolution of the engine (crankshaft). Thus, in the fuel air mixture, the diffusion of the fuel or the homogenization of the mixture is sufficiently performed. Incidentally, the exhaust valve 3B whose cam-profile is configured so as to perform the valve seating twice during one cycle of four strokes is known; however, according to this approach (the conventional approach), it is difficult to secure sufficient mixing lead time for homogenizing the air fuel mixture.

Further, in a case where the inhomogeneous distribution regarding the air fuel mixture (uneven oxygen-density distribution) is formed, the black smoke is easily produced in a fuel rich area (i.e. in a low oxygen density area); and, the NOx is easily produced in a fuel lean area (i.e. in a high oxygen density area). Thus, unfavorable results are brought about. In order to avoid inhomogeneous distribution regarding the air fuel mixture, there is an approach as a conventional approach in which a high swirl ratio regarding the swirl in the engine cylinder is adopted; however, a high swirl ratio generally accompanies the reduction of the quantity of the air to be charged into the engine cylinder. Hence, it is rather favorable to mix the exhaust gas with the fresh air by performing the collision of the exhaust gas and the fresh air; and, this approach (this mode of the present invention) does not accompany the reduction of the charging air quantity.

### (Third Mode)

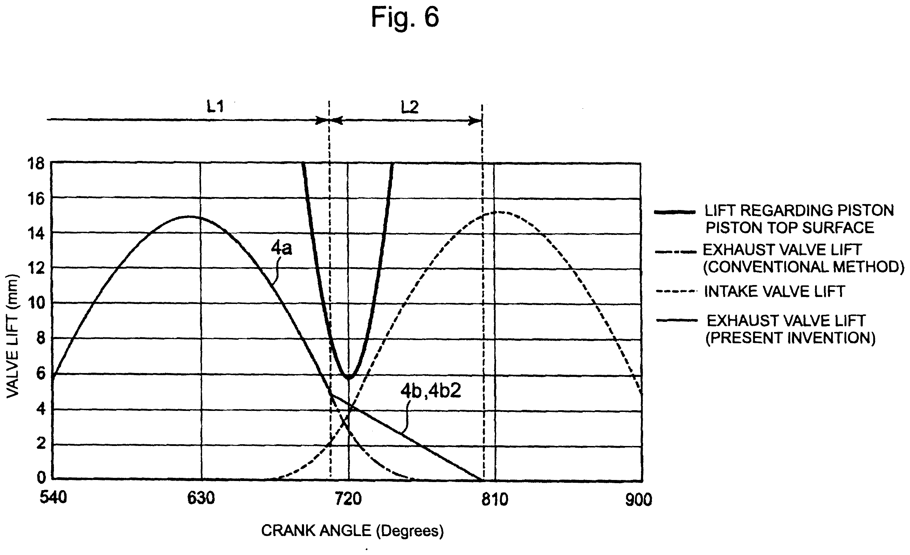

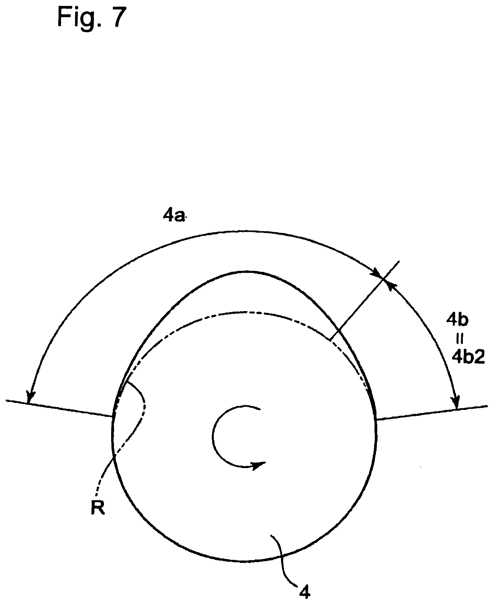

Fig.6 shows a graph of the valve lift curve with respect to the crank angle regarding the turbocharged four-stroke cycle engine according a third mode of the present invention; Fig.7 depicts a cam profile of the cam according the third mode of the present invention. In addition, in explaining this third mode, the same components in the third mode as in the first mode are given common numerals or symbols; and, explanation repetitions are omitted.

In Fig. 6, the solid line 4a and the dash-dot line form the lift curve according to the conventional approach; and, the crank angle range (regarding the lateral axis parameter) regarding the conventional lift curve is extended and the extended range as a whole is divided into the area L1 and the area L2. In the area L2 according to this third mode, the lift curve is depicted with a constant velocity line so that the valve lift displacement is linearly reduced.

As shown in Fig. 7, the gas return lobe part 4b of the exhaust valve pressing cam 4 corresponds to a constant speed part 4b2, the exhaust valve 3B performing a constant velocity movement along the constant speed part 4b2. When the exhaust valve pressing cam 4 is used, the corresponding valve lift curve with regard to the crank angle is the curve depicted in Fig. 6. More concretely, the upward protruding part of the solid line 4a in Fig. 6 corresponds to the main exhaust lobe part 4a in Fig. 7; the straight line that follows the solid line 4a around at the crank angle of 710 degrees in Fig. 6 corresponds to the constant speed part 4b2 in Fig. 7.

The slope of the straight line 4b2 regarding the valve lift curve in Fig. 6 is formed so as to be as gentle as possible; thus, the product of the valve lift by the crank angle, namely, the cumulative opening area of the exhaust port along elapsed time can be increased in comparison with the case of the conventional cam. Thus, the accumulative quantity of the exhaust gas that returns to the inside of the engine can be increased.

The straight line of the constant velocity part 4b2 directly crosses the lateral axis that shows the line of 0 lift displacement, the index of the lateral axis being the crank angle in degree. In other words, at the time point when the right end of the constant velocity part 4b2 (in Fig. 6) reaches the lateral axis, the exhaust valve sits on the valve seat and the valve is closed. Thanks to this constant velocity part 4b2,the closing timing of the exhaust valve 3B can be delayed and the valve lift displacement regarding the exhaust valve can be maintained larger than valve lift displacement regarding the conventional exhaust valve.

### (Fourth Mode)

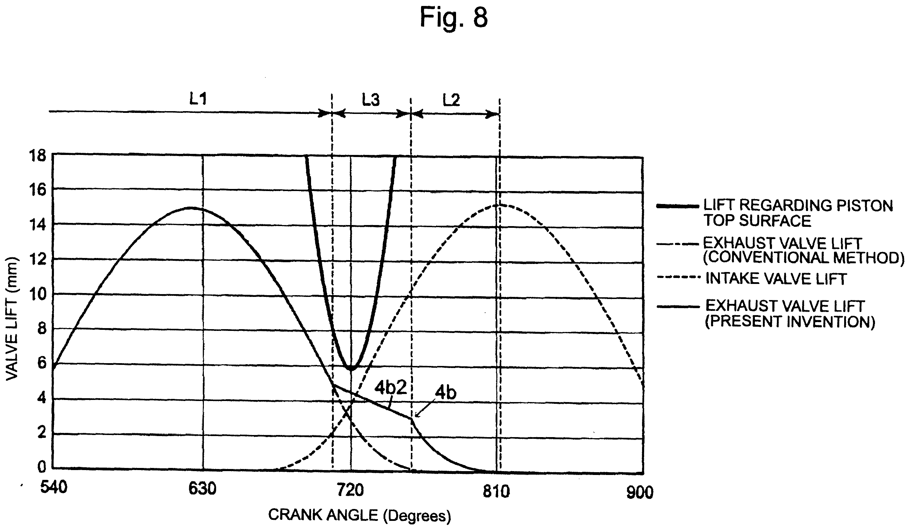

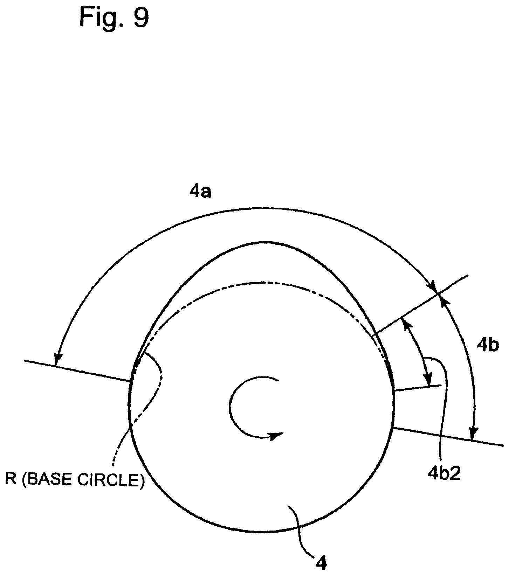

Fig.8 shows a graph of the valve lift curve with respect to the crank angle regarding the turbocharged four-stroke cycle engine according a fourth mode of the present invention; Fig.9 depicts a cam profile of the cam according the fourth mode of the present invention. In addition, in explaining this fourth mode, the same components in the fourth mode as in the first mode are given common numerals or symbols; and, explanation repetitions are omitted.

In Fig. 8, the solid line 4a and the dash-dot line form the lift curve according to the conventional approach; and, the crank angle range (regarding the lateral axis parameter) regarding the conventional lift curve as well as the laterally extended lift curve is divided into the areas L1, L3 and L2. In other words, the total area regarding the conventional lift curve is divided into two areas L1 and L2, and the area L3 in which the valve lift displacement reduces with a constant velocity is inserted between the area L1 and the area L2, the lift curve in the area L1 being connected to the lift curve in the area L3 via the lift curve in the area L3.

In this fourth mode, the gas return lobe part 4b includes the constant velocity part 4b2 that makes the velocity of the exhaust valve 3B constant. In the third mode, the valve is closed when the right end of the straight line corresponding to the constant velocity part 4b2 (in Fig. 6) reaches the lateral axis; on the other hand, in this fourth mode as depicted in Fig. 8, the valve lift curve is reduced to the lateral axis with a gentle curve (in the area L3) after the straight line corresponding to the constant velocity part 4b2 (in Fig. 8) reaches the right side end of the line. This is the main difference between the third mode and this fourth mode.

As described above, when the constant velocity part 4b2 is arranged, the closing timing of the exhaust valve 3B can be delayed and the valve lift displacement regarding the exhaust valve can be maintained larger. In response to the delay of the closing timing and the increased valve lift displacement, the quantity of the exhaust gas that returns to the inside of the engine is increased. Further, the cam profile can be configured with three parts that rise outward from the base circle R in three stages (i.e. in three areas L1, L3, and L2). In this way, the flexibility (the degree of freedom) in designing the cam can be enhanced. Thus, it becomes possible that, by the manner that the exhaust valve comes near to the piston at the top dead center as close as possible, the quantity of the exhaust gas that returns to the inside of the engine is remarkably increased.

In addition, in the above-explanation, a constant velocity part 4b2 is arranged on the cam profile. As a matter of course, multiple constant velocity parts 4b2 may be provided in stages so that the exhaust valve 3B is stepwisely closed via the multiple constant velocity parts of the cam.

### (Fifth Mode)

As a preferable mode of the present invention, it is considered that the cam profile may be different cylinder by cylinder in view of the difference regarding the influence of the exhaust gas pulsation on each cylinder. In other words, with regard to the exhaust cam for lifting and lowering the exhaust valve, the cam profile provided with the gas return lobe part and gas return lobe part may be differentiated cylinder by cylinder. As a result, the quantity of the exhaust gas that returns to the inside of the engine can be increased (in comparison to the case of the above-described modes) in reflecting the situation of the each cylinder regarding the influence of the exhaust gas pulsation

Thus far, the present invention is explained. The present invention is not limited to the above-described modes. It goes without saying that there can be other various modified modes, within the scope of the inherent features of the present invention.

### Industrial Applicability

According to the exhaust valve cam for lifting and lowering the exhaust valve, the turbocharged four-stroke cycle engine and the valve timing control method as per the present invention, the exhaust gas discharged from a cylinder can be returned to another cylinder. Thereby, a greatest possible quantity of the exhaust gas can be returned, while the contact between the exhaust valve and the piston can be evaded. Hence, the exhaust valve cam for lifting and lowering the exhaust valve, the turbocharged four-stroke cycle engine and the valve timing control method can be applied to the engines used for land engine-generators and inboard engines.

## Claims

1. A turbocharged four-stroke cycle engine with a plurality of engine cylinders comprising:
an exhaust gas return-flow device for returning to one cylinder of the plurality of engine cylinders, through an exhaust port of the one cylinder, an exhaust gas from an exhaust port of another cylinder of the plurality of engine cylinders ;
an exhaust-valve lifting and lowering cam (4), for lifting or lowering an exhaust valve (3B) of the one cylinder ; and
a turbocharger (2) adapted to receive an exhaust gas from each cylinder of the plurality of engine cylinders and which is provided on the exhaust-side of the engine ; wherein the cam (4) comprises:
a main exhaust lift part (4a) for lifting the exhaust valve (3B) to discharge the exhaust gas from the one cylinder; and
a return-flow lift part (4b, 4b1, 4b2) which is provided on a cam-follower descending side of the cam (4) for delaying a closing timing of the exhaust valve (3B) and maintaining the exhaust valve (3B) to increase an amount of the exhaust gas returned to the one cylinder from the other cylinder during an opening period of an intake valve regarding the one cylinder, wherein the main exhaust lift part and the return-flow lift part are formed to protrude from a base circle of the cam (4) so as to avoid an interference between the exhaust valve (3B) and a piston and increase an overlap between an opening period of the exhaust valve (3B) of the one cylinder and an opening period of an exhaust valve of the other cylinder and an amount of the exhaust gas returned to the one cylinder from the other cylinder.

2. The turbocharged four-stroke cycle engine) according to claim 1,
wherein the return-flow lift part (4b) comprises a constant lift part (4b1) for keeping lift of the exhaust valve (3B) of the one cylinder at a constant level for a predetermined period in the closing period of the exhaust valve (3B) of the one cylinder.

3. The turbocharged four-stroke cycle engine according to any one of claims 1 or 2,
wherein the valve closing timing of the exhaust valve (3B) of the one cylinder is set at 24 to 130 degrees after a compression top dead center so as to open the exhaust valve (3B) of the one cylinder, while a exhaust pressure of the other cylinder is higher than a charging pressure of the one cylinder,
and the valve opening time of an intake valve (3A) of the one cylinder is set at 5 to 55 degrees before the compression dead center so as to promote mixing of an inlet air of the one cylinder with an exhaust gas returned from the other cylinder.

4. The turbocharged four-stroke cycle engine according to any one of claims 1 to 3,
wherein the return-flow lift part (4b, 4b2) is configured to lift the exhaust valve (3B) of the one cylinder at a constant velocity until the exhaust valve (3B) of the one cylinder is closed in the closing period of the exhaust valve (3B) of the one cylinder wherein the lift monotonously decreases.

5. The turbocharged four-stroke cycle engine according to any one of claims 1 to 3,
wherein the return-flow lift part (4b) comprises a constant velocity lifting part (4b2) for keeping a lifting velocity of the exhaust valve (3B) of the one cylinder at a constant value in the closing period of the exhaust valve (3B) of the one cylinder whose lift monotonously decreases.

6. The turbocharged four-stroke cycle engine according to any one of claims 1 to 5,
wherein a cam profile of the exhaust valve (3B) of the one cylinder is different from a cam profile of the exhaust valve of the other cylinder.

7. The turbocharged four-stroke cycle engine according to any one of claims 1 to 6, wherein an exhaust manifold (HM) provided on the exhaust-side of the engine comprises:
a first exhaust pipe (H1) into which the exhaust gas is discharged from each cylinder;
and a second exhaust pipe (H2) which connects the middle part of the first exhaust pipe to the turbocharger (2).

8. The turbocharged four-stroke cycle engine according
to any one of claims 1 to 7,
configured so that one cylinder cut-off operation is performed at low load so that the cylinder from which a smaller quantity of the exhaust gas returns is selected as the cylinder to be cut in preference to other cylinders.

9. A valve timing control method for an exhaust valve (3B) which returns to one cylinder of a plurality of cylinders of an engine the exhaust gas discharged from another cylinder of the plurality of cylinders of the engine through an exhaust port of the one cylinder,
wherein the engine comprises an exhaust-valve lifting and lowering cam (4) for the one cylinder , which comprises :
a main exhaust lift part which lifts an exhaust valve (3B) of the one cylinder to discharge the exhaust gas from the one cylinder; and
a return-flow lift part which is provided on a cam-follower descending side of the cam (4) and delays a closing timing of the exhaust valve (3B) and maintains lift of the exhaust valve (3B) to increase amount of the exhaust gas returned to the one cylinder from the other cylinder during the opening period of the intake valve regarding the one cylinder,
wherein the exhaust valve (3B) of the one cylinder is lifted or lowered so that an interference between the exhaust valve (3B) and a piston is avoided and an overlap period between an opening period of the exhaust valve of the one cylinder and an opening period of an exhaust valve (3B) of the other cylinder is increased so that the amount of exhaust gas returned to the one cylinder from the other cylinder is increased.

10. The valve timing control method according to claim 9,
wherein the exhaust valve (3B) of the one cylinder is lifted at a constant level for a predetermined period during the exhaust gas returning.

11. The valve timing control method according to any one of claims 9 or 10, wherein the valve closing timing of the exhaust valve (3B) of the one cylinder is set at 24 to 130 degrees after a compression top dead center so as to open the exhaust valve (3B) of the one cylinder, while an exhaust pressure of the other cylinder is higher than a charging pressure of the one cylinder,
and the valve opening time of an intake valve (3A) of the one cylinder is set at 5 to 55 degrees before the compression dead center so as to promote a mixing an inlet air of the one cylinder with an exhaust gas returned from the other cylinder.

12. The valve timing control method according to any one of claims 9 to 11, wherein the exhaust valve (3B) of the one cylinder is lifted at a constant velocity until the exhaust valve (3B) of the one cylinder is closed during the exhaust gas returning.

13. The valve timing control method according to any one of claims 9 to 11, wherein the exhaust valve (3B) of the one cylinder is lifted at a constant velocity for a predetermined period during the exhaust gas returning.

## Patentansprüche

1. Turbogeladener Viertaktmotor mit mehreren Motorzylindern, umfassend:
eine Abgasrückströmvorrichtung zum Rückführen eines Abgases von einem Auslasskanal eines anderen Zylinders der mehreren Motorzylinder zu einem Zylinder der mehreren Motorzylinder über einen Auslasskanal des einen Zylinders,
einen Auslassventil-Hebe- und Absenknocken (4) zum Anheben oder Absenken eines Auslassventils (3B) des einen Zylinders und
einen Turbolader (2), der dafür ausgelegt ist, ein Abgas von jedem Zylinder der mehreren Motorzylinder zu empfangen, und der auf der Auslassseite des Motors angeordnet ist, wobei der Nocken (4) umfasst:
einen Hauptauslasshebeteil (4a) zum Anheben des Auslassventils (3B), um das Abgas aus dem einen Zylinder abzulassen, und
einen Rückströmhebeteil (4b, 4b1, 4b2), der auf einer Nockenstößel-Absenkseite des Nockens (4) angeordnet ist, zum Verzögern einer Schließzeit des Auslassventils (3B) und Halten des Auslassventils (3B) zum Vergrößern der Abgasmenge, die von dem anderen Zylinder zu dem einen Zylinder während eines Öffnungszeitraums eines Einlassventils in Bezug auf den einen Zylinder zurückgeführt wird,
wobei der Hauptauslasshebeteil und der Rückströmhebeteil so ausgebildet sind, dass sie von einem Basiskreis des Nockens (4) hervorstehen, um eine gegenseitige Behinderung zwischen dem Auslassventil (3B) und einem Kolben zu vermeiden und eine Überlappung zwischen einem Öffnungszeitraum des Auslassventils (3B) des einen Zylinders und einem Öffnungszeitraum eines Auslassventils des anderen Zylinders sowie eine Abgasmenge, die von dem anderen Zylinder zu dem einen Zylinder zurückgeführt wird, zu vergrößern.

2. Turbogeladener Viertaktmotor nach Anspruch 1,
wobei der Rückströmhebeteil (4b) einen Konstanthebeteil (4b1) umfasst, um das Auslassventil (3B) des einen Zylinders über einen zuvor festgelegten Zeitraum in dem Schließzeitraum des Auslassventils (3B) des einen Zylinders auf einem konstanten Niveau angehoben zu halten.

3. Turbogeladener Viertaktmotor nach einem der Ansprüche 1 oder 2,
wobei die Ventilschließzeit des Auslassventils (3B) des einen Zylinders auf 24 bis 130 Grad nach dem oberen Totpunkt des Verdichtungstaktes eingestellt wird, damit das Auslassventil (3B) des einen Zylinders geöffnet wird, während ein Auslassdruck des anderen Zylinders höher ist als ein Ladedruck des einen Zylinders, und
die Ventilöffnungszeit eines Einlassventils (3A) des einen Zylinders auf 5 bis 55 Grad vor dem Totpunkt des Verdichtungstaktes eingestellt wird, um das Vermischen von Einlassluft des einen Zylinders mit Abgas, das von dem anderen Zylinder zurückgeführt wird, zu verstärken.

4. Turbogeladener Viertaktmotor nach einem der Ansprüche 1 bis 3,
wobei der Rückströmhebeteil (4b, 4b2) dafür konfiguriert ist, das Auslassventil (3B) des einen Zylinders mit einer konstanten Geschwindigkeit anzuheben, bis das Auslassventil (3B) des einen Zylinders in dem Schließzeitraum des Auslassventils (3B) des einen Zylinders geschlossen ist, wobei das Anheben gleichförmig verringert wird.

5. Turbogeladener Viertaktmotor nach einem der Ansprüche 1 bis 3,
wobei der Rückströmhebeteil (4b) einen Konstantgeschwindigkeitshebeteil (4b2) umfasst, um eine Hebegeschwindigkeit des Auslassventils (3B) des einen Zylinders in dem Schließzeitraum des Auslassventils (3B) des einen Zylinders, dessen Anheben gleichförmig verringert wird, auf einem konstanten Wert zu halten.

6. Turbogeladener Viertaktmotor nach einem der Ansprüche 1 bis 5,
wobei ein Nockenprofil des Auslassventils (3B) des einen Zylinders von einem Nockenprofil des Auslassventils des anderen Zylinders verschieden ist.

7. Turbogeladener Viertaktmotor nach einem der Ansprüche 1 bis 6, wobei ein Abgaskrümmer (HM), der auf der Auslassseite des Motors angeordnet ist, umfasst:
ein erstes Abgasrohr (H1), in das das Abgas aus jedem Zylinder abgelassen wird, und
ein zweites Abgasrohr (H2), das den mittleren Teil des ersten Abgasrohres mit dem Turbolader (2) verbindet.

8. Turbogeladener Viertaktmotor nach einem der Ansprüche 1 bis 7,
der so konfiguriert ist, dass ein Zylinderabschaltvorgang bei geringer Last ausgeführt wird, so dass der Zylinder, aus dem eine kleinere menge des Abgases zurückgeführt wird, als der Zylinder ausgewählt wird, der vorrangig vor anderen Zylindern abgeschaltet wird.

9. Ventilsteuerungsverfahren für ein Auslassventil (3B), das zu einem Zylinder von mehreren Zylindern eines Motors das Abgas, das von einem anderen Zylinder der mehreren Zylindern des Motors abgelassen wurde, durch einen Auslasskanal des einen Zylinders zurückführt,
wobei der Motor einen Auslassventil-Hebe- und -Absenknocken (4) für den einen Zylinder umfasst, der umfasst:
einen Hauptauslasshebeteil, der ein Auslassventil (3B) des einen Zylinders anhebt, um das Abgas aus dem einen Zylinder abzulassen, und
einen Rückströmhebeteil, der auf einer Nockenstößel-Absenkseite des Nockens (4) angeordnet ist und eine Schließzeit des Auslassventils (3B) verzögert und das Auslassventil (3B) hält, um die Abgasmenge, die von dem anderen Zylinder zu dem einen Zylinder während des Öffnungszeitraums des Einlassventils in Bezug auf den einen Zylinder zurückgeführt wird, zu vergrößern,
wobei das Auslassventil (3B) des einen Zylinders so angehoben oder abgesenkt wird, dass eine gegenseitige Behinderung zwischen dem Auslassventil (3B) und einem Kolben vermieden wird und ein Überlappungszeitraum zwischen einem Öffnungszeitraum des Auslassventils des einen Zylinders und einem Öffnungszeitraum eines Auslassventils (3B) des anderen Zylinders so vergrößert wird, dass eine Abgasmenge, die von dem anderen Zylinder zu dem einen Zylinder zurückgeführt wird, vergrößert wird.

10. Ventilsteuerungsverfahren nach Anspruch 9,
wobei das Auslassventil (3B) des einen Zylinders mit einem konstanten Niveau über einen zuvor festgelegten Zeitraum während der Abgasrückführung angehoben wird.

11. Ventilsteuerungsverfahren nach einem der Ansprüche 9 oder 10, wobei die Ventilschließzeit des Auslassventils (3B) des einen Zylinders auf 24 bis 130 Grad nach dem oberen Totpunkt des Verdichtungstaktes eingestellt wird, damit das Auslassventil (3B) des einen Zylinders geöffnet wird, während ein Auslassdruck des anderen Zylinders höher ist als ein Ladedruck des einen Zylinders, und
die Ventilöffnungszeit eines Einlassventils (3A) des einen Zylinders auf 5 bis 55 Grad vor dem Totpunkt des Verdichtungstaktes eingestellt wird, um das Vermischen von Einlassluft des einen Zylinders mit Abgas, das von dem anderen Zylinder zurückgeführt wird, zu verstärken.

12. Ventilsteuerungsverfahren nach einem der Ansprüche 9 bis 11, wobei das Auslassventil 3B) des einen Zylinders mit einer konstanten Geschwindigkeit angehoben wird, bis das Auslassventil (3B) des einen Zylinders während der Abgasrückführung geschlossen ist.

13. Ventilsteuerungsverfahren nach einem der Ansprüche 9 bis 11, wobei das Auslassventil (3B) des einen Zylinders mit einer konstanten Geschwindigkeit über einen zuvor festgelegten Zeitraum während der Abgasrückführung angehoben wird.

## Revendications

1. Moteur à quatre temps turbocompressé avec une pluralité de cylindres de moteur comportant :
un dispositif d'écoulement de retour de gaz d'échappement destiné à renvoyer vers un cylindre de la pluralité de cylindres de moteur, à travers un orifice d'échappement du cylindre, un gaz d'échappement provenant d'un orifice d'échappement d'un autre cylindre de la pluralité de cylindres de moteur ;
une came de soulèvement et d'abaissement de soupape d'échappement (4), destinée à soulever ou abaisser une soupape d'échappement (3B) du cylindre ; et
un turbocompresseur (2) prévu pour recevoir un gaz d'échappement de chaque cylindre de la pluralité de cylindres de moteur et qui est prévu sur le côté d'échappement du moteur ; dans lequel la came (4) comporte :
une partie principale de soulèvement d'échappement (4a) destinée à soulever la soupape d'échappement (3B) pour refouler le gaz d'échappement du cylindre ; et
une partie de soulèvement d'écoulement de retour (4b, 4b1, 4b2) qui est prévue sur un côté de descente de suiveur de came de la came (4) pour retarder un calage de fermeture de la soupape d'échappement (3B) et maintenir la soupape d'échappement (3B) pour augmenter une quantité du gaz d'échappement renvoyé vers le cylindre depuis l'autre cylindre pendant une période d'ouverture d'une soupape d'admission concernant le cylindre, dans lequel la partie principale de soulèvement d'échappement et la partie de soulèvement d'écoulement de retour sont formées pour dépasser d'un cercle de base de la came (4) de façon à éviter une interférence entre la soupape d'échappement (3B) et un piston et pour augmenter un chevauchement entre une période d'ouverture de soupape d'échappement (3B) du cylindre et une période d'ouverture d'une soupape d'échappement de l'autre cylindre et une quantité du gaz d'échappement renvoyé vers le cylindre depuis l'autre cylindre.

2. Moteur à quatre temps turbocompressé selon la revendication 1,
dans lequel la partie de soulèvement d'écoulement de retour (4b) comporte une partie de soulèvement constant (4b1) pour maintenir une levée de la soupape d'échappement (3B) du cylindre à un niveau constant pendant une période prédéterminée dans la période de fermeture de la soupape d'échappement (3B) du cylindre.

3. Moteur à quatre temps turbocompressé selon l'une quelconque des revendications 1 ou 2,
dans lequel le calage de fermeture de soupape de la soupape d'échappement (3B) du cylindre est établi à 24 à 130 degrés après un point mort haut de compression de façon à ouvrir la soupape d'échappement (3B) du cylindre, alors qu'une pression d'échappement de l'autre cylindre est plus élevée qu'une pression de remplissage du cylindre,
et le calage d'ouverture de soupape d'une soupape d'admission (3A) du cylindre est établi à 5 à 55 degrés avant le point mort de compression de façon à favoriser un mélange d'un air d'entrée du cylindre avec un gaz d'échappement renvoyé depuis l'autre cylindre.

4. Moteur à quatre temps turbocompressé selon l'une quelconque des revendications 1 à 3,
dans lequel la partie de soulèvement d'écoulement de retour (4b, 4b2) est configurée pour soulever la soupape d'échappement (3B) du cylindre à une vitesse constante jusqu'à ce que la soupape d'échappement (3B) du cylindre soit fermée dans la période de fermeture de la soupape d'échappement (3B) du cylindre dans lequel le soulèvement diminue de manière monotone.

5. Moteur à quatre temps turbocompressé selon l'une quelconque des revendications 1 à 3,
dans lequel la partie de soulèvement d'écoulement de retour (4b) comporte une partie de soulèvement à vitesse constante (4b2) destinée à maintenir une vitesse de soulèvement de la soupape d'échappement (3B) du cylindre à une valeur constante dans la période de fermeture de la soupape d'échappement (3B) du cylindre dont le soulèvement diminue de manière monotone.

6. Moteur à quatre temps turbocompressé selon l'une quelconque des revendications 1 à 5,
dans lequel un profil de came de la soupape d'échappement (3B) du cylindre est différent d'un profil de came de la soupape d'échappement de l'autre cylindre.

7. Moteur à quatre temps turbocompressé selon l'une quelconque des revendications 1 à 6, dans lequel un collecteur d'échappement (HM) prévu sur le côté d'échappement du moteur comporte :
un premier tube d'échappement (H1) dans lequel le gaz d'échappement est refoulé de chaque cylindre ;
et un deuxième tube d'échappement (H2) qui relie la partie médiane du premier tube d'échappement au turbocompresseur (2).

8. Moteur à quatre temps turbocompressé selon l'une quelconque des revendications 1 à 7,
configuré de telle sorte qu'une opération de coupure de cylindre est réalisée à faible charge de telle sorte que le cylindre duquel une plus petite quantité du gaz d'échappement revient est choisi comme cylindre devant être coupé de préférence à d'autres cylindres.

9. Procédé de commande de calage de soupape pour une soupape d'échappement (3B) qui renvoie vers un cylindre d'une pluralité de cylindres d'un moteur le gaz d'échappement refoulé d'un autre cylindre de la pluralité de cylindres du moteur à travers un orifice d'échappement du cylindre,
dans lequel le moteur comporte une came de soulèvement et d'abaissement de soupape d'échappement (4) pour le cylindre, qui comporte :
une partie principale de soulèvement d'échappement qui soulève une soupape d'échappement (3B) du cylindre pour refouler le gaz d'échappement du cylindre ; et
une partie de soulèvement d'écoulement de retour qui est prévue sur un côté de descente de suiveur de came de la came (4) et retarde un calage de fermeture de la soupape d'échappement (3B) et maintient un soulèvement de la soupape d'échappement (3B) pour augmenter une quantité du gaz d'échappement renvoyé vers le cylindre depuis l'autre cylindre pendant la période d'ouverture de la soupape d'admission concernant le cylindre,
dans lequel la soupape d'échappement (3B) du cylindre est soulevée ou abaissée de telle sorte qu'une interférence entre la soupape d'échappement (3B) et un piston est évitée et une période de chevauchement entre une période d'ouverture de la soupape d'échappement du cylindre et une période d'ouverture d'une soupape d'échappement (3B) de l'autre cylindre est augmentée de telle sorte que la quantité de gaz d'échappement renvoyé vers le cylindre depuis l'autre cylindre est augmentée.

10. Procédé de commande de calage de soupape selon la revendication 9,
selon lequel la soupape d'échappement (3B) du cylindre est soulevée à un niveau constant pendant une période prédéterminée pendant le retour de gaz d'échappement.

11. Procédé de commande de calage de soupape selon l'une quelconque des revendications 9 ou 10, selon lequel le calage de fermeture de soupape de la soupape d'échappement (3B) du cylindre est établi à 24 à 130 degrés après un point mort haut de compression de façon à ouvrir la soupape d'échappement (3B) du cylindre, alors qu'une pression d'échappement de l'autre cylindre est plus élevée qu'une pression de remplissage du cylindre,
et le calage d'ouverture de soupape d'une soupape d'admission (3A) du cylindre est établi à 5 à 55 degrés avant le point mort de compression de façon à favoriser un mélange d'un air d'entrée du cylindre avec un gaz d'échappement renvoyé depuis l'autre cylindre.

12. Procédé de commande de calage de soupape selon l'une quelconque des revendications 9 à 11, selon lequel la soupape d'échappement (3B) du cylindre est soulevée à une vitesse constante jusqu'à ce que la soupape d'échappement (3B) du cylindre soit fermée pendant le retour de gaz d'échappement.

13. Procédé de commande de calage de soupape selon l'une quelconque des revendications 9 à 11, selon lequel la soupape d'échappement (3B) du cylindre est soulevée à une vitesse constante pendant une période prédéterminée pendant le retour de gaz d'échappement.
